# EUROPÄISCHE PATENTSCHRIFT

(11) **EP 0 781 187 B1**
(45) Veröffentlichungstag und Bekanntmachung des Hinweises auf die Patenterteilung: **13.05.1998**
(21) Anmeldenummer: 95927625.4
(22) Anmeldetag: 04.08.1995
(51) Int. Cl.: B23K 26/02

(54) **VERFAHREN UND VORRICHTUNG ZUM MATERIALBEARBEITEN MIT PLASMA INDUZIERENDER LASERSTRAHLUNG**
METHOD AND DEVICE FOR WORKING MATERIALS USING PLASMA-INDUCING LASER RADIATION
PROCEDE ET DISPOSITIF D'USINAGE DE MATERIAUX AVEC UN RAYONNEMENT LASER INDUCTEUR DE PLASMA

(30) Priorität: 26.09.1994 DE 4434409
(43) Veröffentlichungstag der Anmeldung: 02.07.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEYER, Eckhard, D-52159 Roetgen-Rott (DE); BEERSIEK, Jörg, D-52080 Aachen (DE); SCHULZ, Wolfgang, D-52379 Langerwehe (DE); NITSCH, Holger, D-52064 Aachen (DE)
(74) Vertreter: Eichler, Peter, Dipl.-Ing.
(86) Internationale Anmeldenummer: DE9501017
(87) Internationale Veröffentlichungsnummer: WO9609912

(56) Entgegenhaltungen:
- EP-A- 0 112 762
- EP-A- 0 437 226
- DE-A- 4 106 008

## Beschreibung

Die Erfindung bezieht sich auf ein Verfahren zum Materialbearbeiten mit Plasma induzierender Hochenergiestrahlung, insbesondere Laserstrahlung, bei dem aus dem Bereich des Werkstücks herrührende Strahlung in der Achse der auf das Werkstück fokussierten Laserstrahlung in Abhängigkeit von der Zeit beobachtet wird.

Verfahren mit den vorgenannten Verfahrensmerkmalen sind als Laserschweißverfahren allgemein bekannt. Die dabei beobachteten optischen und akustischen Signale werden zur Überwachung und Steuerung eingesetzt. Derartige Signale rühren von der Werkstückoberfläche oder von oberhalb der Werkstückoberfläche her. Dabei ist z.B. die Detektion einer Durchschweissung nur in isolierten Parameterbereichen möglich. Des weiteren ist es allgemein bekannt, die Unterseite eines Werkstücks zu beobachten um eine Durchschweißung zu ermitteln. Das Werkstück ist jedoch während des industriellen Fertigungsprozesses an der Unterseite häufig nur schwer zugänglich. Es besteht daher Bedarf, die Einschweißtiefe in das Werkstück von dessen Oberseite her zu ermitteln, also von der Seite, von der die Laserstrahlung zugeführt wird.

Der Erfindung liegt daher die Aufgabe zugrunde, ein Verfahren mit den eingangs genannten Merkmalen so zu verbessern, daß die Eindringtiefe von oberhalb des Werkstücks zuverlässig fortlaufend während des Materialbearbeitens ermittelt werden kann.

Diese Aufgabe wird dadurch gelöst, daß ausschließlich der Querschnitt der Dampfkapillaren mit einer die gesamte Werkstückdicke erfassenden Tiefenschärfe beobachtet wird, und daß der Mittelwert der Intensität der Plasmastrahlung als Maß für die Eindringtiefe verwendet wird.

Für die Erfindung ist von Bedeutung, daß eine Beobachtung in die Tiefe der Wechselwirkungszone der Laserstrahlung mit dem Werkstück hinein erfolgt. Es ist also erforderlich, Signale aus dem Inneren der Dampfkapillare zuverlässig zu erfassen und zu verwerten. Das wird dadurch erreicht, daß ausschließlich der Querschnitt der Dampfkapillaren beobachtet und so störende seitliche Signale ausgeschaltet werden. Die dafür erforderliche Tiefenschärfe wird so bestimmt, daß die gesamte Werkstückdicke bei der Beobachtung erfaßt wird. Beobachtet wird die Leuchtintensität des Plasmas, das bei der Plasmabearbeitung entsteht. Da diese Intensität jedoch stark fluktuiert, wird der Mittelwert der Intensität der Plasmastrahlung als Maß für die Eindringtiefe verwendet. Wenn die Laserstrahlung so tief in das Werkstück eindringt, daß die Tiefe der Wechselwirkungszone gleich der Werkstückdicke ist, liegt eine Durchschweißung vor. Es ergibt sich ein charakteristisches Abweichen des Mittelwerts der Intensität im zeitlichen Verlauf des Vorgangs der Materialbearbeitung. Bedarfsweise kann das Bearbeitungsverfahren abgebrochen oder so gestaltet werden, daß ein Durchschweißen zur Vermeidung eines unerwünschten Bearbeitungsergebnisses vermieden wird.

Bei dem vorbeschriebenen Verfahren wird vereinfachend angenommen, daß die Dichte und die Temperatur der strahlungsemittierenden Teilchen in der Dampfkapillaren konstant sind. Unter dieser Voraussetzung ist die gemessene Strahlungsintensität in erster Näherung proportional der Eindringtiefe der Dampfkapillaren in das Werkstück. Es gibt jedoch eine Vielzahl von Einflußfaktoren auf die Dichte und die Temperatur innerhalb der Dampfkapillaren, so daß die angenommene Konstanz nicht gegeben ist. Einflußgrößen sind beispielsweise dynamische Vorgänge innerhalb der Dampfkapillaren infolge von Bewegungen der Absorptions- und der Schmelzfront. Auch die Bearbeitungsgeommetrie spielt eine maßgebliche Rolle. Dadurch bedingte Intensitätsschwankungen stören das Meßergebnis. Sie können jedoch dadurch ausgeschaltet werden, daß der Mittelwert der Strahlungsintensität unter Ausschaltung von Intensitätsspitzenwerten bestimmt wird, die gleichzeitig mit optischen und/oder akustischen Signalen auftreten, welche seitlich der fokussierten Laserstrahlung ermittelt werden.

Die Schwankungen der Strahlungsintensität enthalten jedoch auch Informationen über die Vorgänge in der Dampfkapillaren bzw. über den Ort dieser Vorgänge. Um diesen Entstehungsort zu ermitteln, kann das Verfahren so durchgeführt werden, daß der Entstehungsort von Intensitätsspitzenwerten in der Dampfkapillaren durch Laufzeitdifferenzmessung axialer und seitlicher einander zeitlich zugehöriger Meßwerte bestimmt wird. An diesen Orten von Intensitätsspitzenwerten können Bearbeitungsfehler auftreten, bedingt durch Spritzer und Poren. Es wird eine Qualitätskontrolle des Bearbeitungsverfahrens ermöglicht.

Die Erfindung bezieht sich auch auf eine Vorrichtung zum Materialbearbeiten mit Plasma induzierender Laserstrahlung, die von einem Spiegel auf das Werkstück fokussiert wird, und mit einer vom Werkstück herrührende Strahlung in der Richtung der fokussierten Laserstrahlung beobachtenden Optik.

Um die Eindringtiefe der Wechselwirkungszone der Laserstrahlung bzw. der Dampfkapillaren in das Werkstück in zeitlichem Ablauf fortwährend ermitteln zu können und zugleich in der Lage zu sein, Informationen aus unterschiedlich tiefen Bereichen der Dampfkapillare zu gewinnen, wird die Vorrichtung so ausgebildet, daß der radiale Beobachtungsbereich der Beobachtungsoptik auf den Querschnitt der Dampfkapillaren beschränkt ist, daß eine den Mittelwert der Intensität der Plasmastrahlung erfassende Meßeinrichtung vorhanden ist, und daß die Beobachtungsoptik eine Zylinderlinse mit im Strahlengang nachgeordneter Diodenzeile aufweist, die schräggestellt und an eine Auswerteeinheit angeschlossen ist, welche die Ausgangswerte der einzelnen Dioden in Relation zu einem Bezugswert auswertet. Dieser Bezugswert ist beispielsweise der Mittelwert der Strahlungsintensität. Die Beschränkung des radialen Beobachtungsbereichs der Beobachtungsoptik auf den Querschnitt der Dampfkapillaren gewährleistet die Ausschaltung von Einflüssen aus dem Bereich von Werkstücken um die Dampfkapillare herum. Die Meßeinrichtung bildet einen Mittelwert der Intensität der Plasmastrahlung zur Ausschaltung von Fluktuaktionen, die das Meßergebnis der Eindringtiefe in unerwünschter Weise beeinträchtigen. Mit Hilfe der Beobachtungsoptik können aus unterschiedlichen Tiefen der Dampfkapillare herrührende Strahlungssignale ermittelt und danach von der Auswerteeinheit ausgewertet werden, beispielsweise im Sinne einer Lokalisierung eines Intensitätsspitzenwertes.

Dieselbe vorgenannte Aufgabe wird dadurch gelöst, daß der radiale Beobachtungsbereich der Beobachtungsoptik auf den Querschnitt der Dampfkapillaren beschränkt ist, daß eine den Mittelwert der Intensität der Plasmastrahlung erfassende Meßeinrichtung vorhanden ist, daß die Beobachtungsoptik eine rotationssymmetrische Linse aufweist, auf deren optischer Achse ein Lichtsensor angeordnet ist, der denjenigen Strahlungsanteil erfaßt, der aus der dem Fokus der Beobachtungsoptik konjugierten Ebene herrührt, und daß mindestens ein weiterer Lichtsensor außerhalb des der optischen Achse der Beobachtungsoptik angeordnet ist, der einen Strahlungsanteil erfaßt, der aus einer dem Fokus der Beobachtungsoptik nicht konjugierten Ebene herrührt, und daß alle Lichtsensoren an eine Auswerteeinheit angeschlossen sind, welche die gemessenen Strahlungsintensitäten in Relation zu einem vorbestimmten Bezugswert auswertet. Dieser Bezugswert ist beispielsweise der Mittelwert der Strahlungsintensität.

Um die vorgenannte Vorrichtung im Sinne einer einfachen Ausbildung zu gestalten, sind die Lichtsensoren Lichtwellenleiter.

Eine weitere Präzisierung eines Meßergebnisses der vorbeschriebenen Vorrichtungen ist dadurch möglich, daß der spektrale Bereich der vom Werkstück herrührenden Strahlung mit einem Bandpaßfilter beschränkt ist. Es werden spektrale Bereiche des Plasmaleuchtens ausgeschaltet, welche Informationen aus der Tiefe der Dampfkapillaren nicht deutlich genug darstellen.

Wenn die Vorrichtung so ausgebildet wird, daß die Laserstrahlung einen Ringmode aufweist, daß ein Lochspiegel als Fokussierspiegel vorhanden ist, und daß das Loch des Fokussierspiegels innerhalb des Ringmaximums des Ringmodes angeordnet ist, so kann eine Verringerung der Leistungsverluste der Strahlung im Bereich des Loches des Lochspiegels erreicht werden. Das ist insbesondere vorteilhaft, wenn ein vergleichsweise großes Loch gewählt wird, um eine möglichst hohe axiale Auflösung bzw. eine kleine axiale Tiefenschärfe zu erreichen.

Die Ausbildung der Beobachtungsoptik hinsichtlich der Anordnung ihres Fokus und damit hinsichtlich des diesem Fokus konjugierten Ebene kann die Vorrichtung so ausgebildet werden, daß das Werkstück sowohl im Auftreffpunkt bzw. Fokus der Laserstrahlung auf dem Werkstück beobachtet werden kann, als auch oberhalb oder unterhalb davon. Vorteilhaft im Sinne einer problemlosen Ermittlung eines Durchschweißens und einer Abstimmung der Vorrichtung zur Beobachtung des gesamten Querschnitts der Dampfkapillaren ist es, wenn der Fokus der Beobachtungsoptik an der Unterseite des Werkstücks angeordnet ist.

Die Erfindung wird anhand von in der Zeichnung dargestellten Ausführungsbeispielen erläutert. Es zeigt:
- Fig.1: eine schematische Darstellung einer Vorrichtung zur Beobachtung eines Werkstücks beim Bearbeiten mit Laserstrahlung,
- Fig.2: den Signalverlauf beim Pulsen mit einem CO₂-Laser,
- Fig.3a bis 3c: Erläuterungen zur Ausbildung einer Dampfkapillaren eines stationären Tiefschweißprozesses beim Laserstrahlschweißen mit einem CO₂-Laser,
- Fig.4: die Korrelation zwischen einem zeitlichen Sensorsignal und der Einschweißtiefe in Abhängigkeit von der Zeit,
- Fig.5: eine schematische Darstellung zu einer erfindungsgemäßen Beobachtungsoptik, und
- Fig.6: eine schematische Darstellung zu einer weiteren erfindungsgemäßen Beobachtungsoptik.

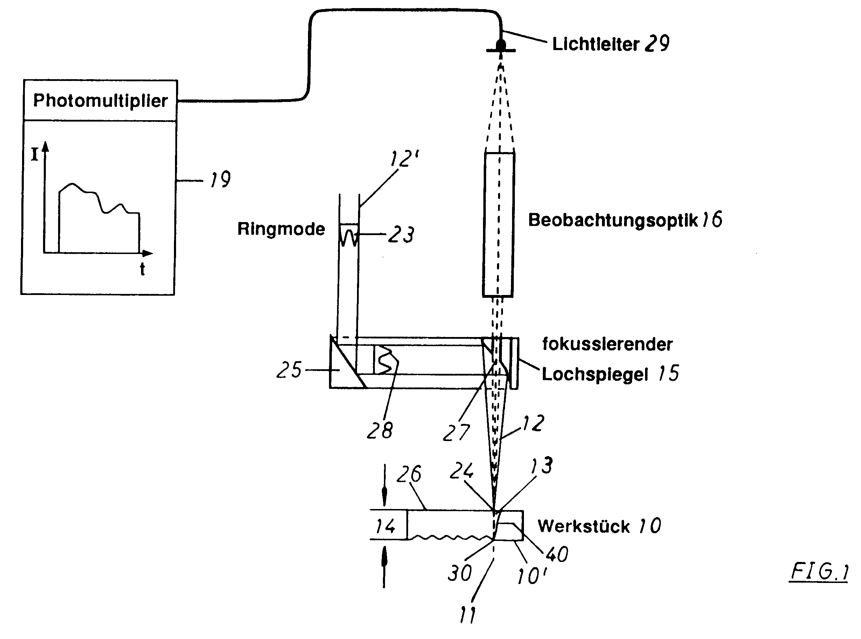

Fig.1 zeigt schematisch ein Werkstück 10, das mit fokussierter Laserstrahlung 12 bearbeitet wird. Als Bearbeiten kommt, je nach Einsatz des verwendeten Lasers, ein Schweißen, Schneiden, Bohren, Abtragen oder Umschmelzen in Frage. Die vom Laser abgegebene Laserstrahlung 12' wird mittels eines Umlenkspiegels 25 auf einen Fokussierspiegel 15 gelenkt, der fokussierte Laserstrahlung 12 auf das Werkstück 10 lenkt. Der Fokus 24 liegt beispielsweise auf der Werkstückoberfläche 26. Als Fokussierspiegel 15 wird ein Lochspiegel eingesetzt, dessen Loch 27 innerhalb des Ringmaximums 28 der einen Ringmode 23 aufweisenden Laserstrahlung 12 angeordnet ist. Das Loch 27 läßt Freiraum für die Beobachtung der Werkstückoberfläche 26 im Bereich des Fokus 24 des Werkstücks 10. Zur Beobachtung wird eine Beobachtungsoptik 16 eingesetzt, die das Werkstück 10 genau in Richtung der Achse 11 der fokussierten Laserstrahlung 12 beobachtet. Von der Beobachtungsoptik 16 aufgenommenes Licht wird auf einen Lichtleiter 29 gebündelt, der die Beobachtungsoptik 16 mit einer Auswerteeinheit 19 verbindet, mit dem eine Meßwertauswertung erfolgt.

Damit die Beobachtungsoptik 16 eine möglichst hohe Auflösung erreicht, wird das Loch möglichst groß gewählt. Zu diesem Zweck besitzt die Beobachtungsoptik 16 auch eine möglichst kleine Brennweite. Der Fokus 30 der Beobachtungsoptik 16 ist bei dem dargestellten Beispiel der Fig.1 an der Unterseite 10' des Werkstücks 10 angeordnet. Die Bearbeitungsoptik 16 beobachtet also ausschließlich oberhalb des Fokus 24 im Bereich der gesamten Werkstückdicke 14. Der Fokus 30 der Beobachtungsoptik 16 könnte aber auch anders angeordnet werden, beispielsweise so, daß sowohl oberhalb als auch unterhalb des Fokus 24 beobachtet werden kann, nämlich mit vergleichsweise großer Tiefenschärfe innerhalb der Wechselwirkungszone der Laserstrahlung 12 mit dem Werkstück 10. Es ist möglich, den Fokus 30 so anzuordnen, daß auch oberhalb des Werkstücks 10 beobachtet werden kann.

Der Beobachtungsprozeß erfolgt während des Pulsbetriebs des Lasers, wie auch während der Pulspause. Als Laser kommt beispielsweise ein CO₂-Laser zum Einsatz. Statt des als Fokussierspiegel 15 ausgebildeten Lochspiegels kann auch ein GaAs-Fenster eingesetzt werden, welches das Licht des CO₂-Lasers durchläßt, aus der Wechselwirkungszone des Werkstücks 10 herrührendes Licht jedoch nicht durchläßt, so daß eine Beobachtung der die Wechselwirkungszone bildenden Dampfkapillaren 13 möglich ist. Ebenso ist der Einsatz eines ZnSe-Fensters möglich, welches das Licht des CO₂-Lasers reflektiert, aus der Wechselwirkungszone stammendes sichtbares Licht jedoch durchläßt. Anstelle eines CO₂-Lasers kann für die Materialbearbeitung auch ein Nd-YAG-Laser eingesetzt werden.

Die Beobachtungsoptik 16, mit der der Beobachtungsvorgang axial zum einfallenden fokussierten Laserstrahl 12 ermöglicht wird, ist mit einem Bandpaßfilter versehen. Der Bandpaßfilter beschränkt das einfallende Licht auf 500nm ± 5nm und damit auf denjenigen Wellenlängenbereich des gesamten Strahlungsspektrums, der von der Emission des laserinduzierten Plasmas dominiert wird. Die Tiefenschärfe der Beobachtungsoptik läßt sich variieren. Sie ist beispielsweise so eingestellt, daß die gesamte Wechselwirkungszone bzw. Dampfkapillare 13 bzw. die Werkstückdicke 14 durch die Beobachtungsoptik erfaßt wird. Die Auflösung der Optik in radialer Richtung, also quer zur Achse 11 ist auf einen Meßbereich von 0,5mm eingestellt. Das bedeutet, daß das von der Vorrichtung in Fig.1 ermittelte Signal integral die Emission des gesamten Bereichs der Dampfkapillaren wiedergibt, wenn die Absorptionsfront 41 die in Fig.1 dargestellte durchschnittliche Neigung hat und die Kapillartiefe 5mm beträgt.

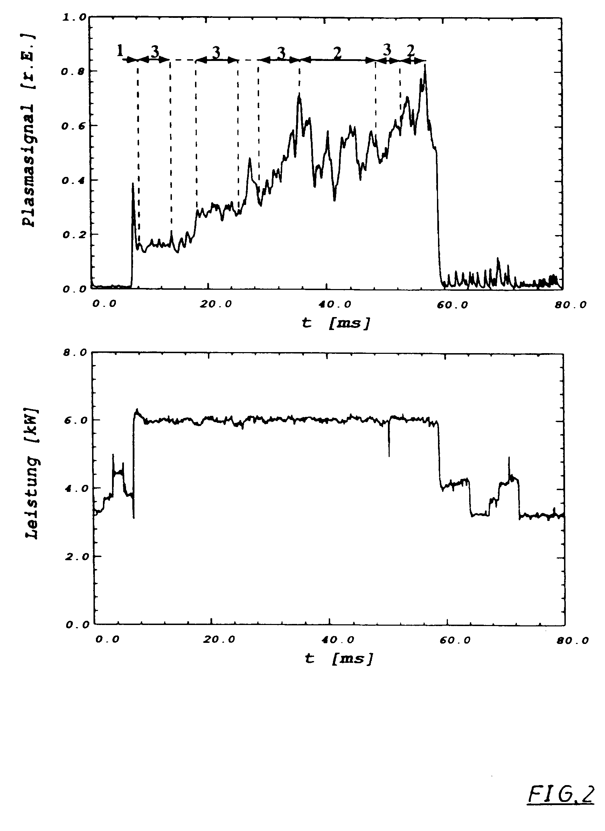

Fig.2 zeigt einen beispielsweisen mit der Auswerteeinheit 19 ermittelten Signalverlauf beim Pulsen mit einem CO₂-Laser dessen Leistung mit einer Frequenz von 10 Hz moduliert wurde. Das tiefere Niveau lag bei etwa 3 kW, wie Fig.2 unten zeigt, während das höhere bei etwa 6 kW lag. Bei den vorgegebenen Prozeßparametern war bei den niedrigeren Leistungen das laserinduzierte Plasma nahezu erloschen. Während dessen erfolgt ein Schweißprozeß mit geringer Einschweißtiefe in der Größenordnung des Strahldurchmessers. Es erfolgt ein Wärmeleitungsschweißen. Bei hoher Laserleistung wird ein Tiefschweißprozeß erreicht, indem mit der Laserstrahlung 12 ein Plasma induziert wird. Dabei trifft die Laserstrahlung 12 zum Zeitpunkt des Einschaltens der hohen Leistung auf ein vorgewärmtes Schmelzbad, dessen Oberfläche immer noch eine Temperatur nahe der Dampftemperatur aufweist. Bei dieser Prozeßführung kann am besten erläutert werden, welche charakteristische Auswirkung das Tiefschweißen auf das Strahlungssignal hat, welches von dem erzeugten Plasma ausgeht.

Zu Beginn des Intervalls hoher Laserleistung trifft die Laserstrahlung 12 auf eine glatte Schmelzoberfläche 31. Die Schmelze 32 des Werkstücks 10 befindet sich in einer vom festen Werkstück 10 gebildeten Vertiefung 33. Oberhalb der Schmelze bildet sich ein Plasma 34 aus. Zwischen dem Plasma 34 und der Schmelze 32 befindet sich die Absorptionsfront 41, also die Phasengrenze flüssig-gasförmig, nämlich der Bereich, in dem die Laserstrahlung 12 auf die flüssige Wand der Dampfkapillaren 13 trifft. Zwischen der Schmelze 32 und dem festen Werkstück 10 befindet sich die Schmelzfront 35, also die Phasengrenze flüssig-fest. Die Tiefe der Schmelzfront gibt die Eindringtiefe an, also beim Plasmaschweißen, unter Vernachlässigung der Tiefe Absorptionsfront, die Tiefe der Dampfkapillaren.

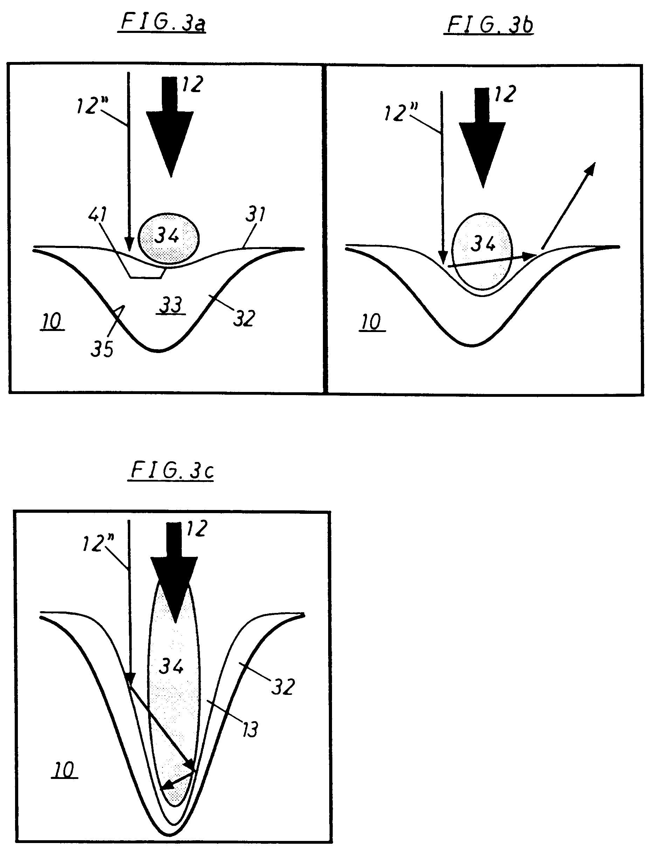

Das Plasma 34 leuchtet und das emittierte Licht wird von der oben beschriebenen Beobachtungsoptik 16 aufgenommen, wobei für die Interpretation des Signalverlaufs die oben genannten Anordnungen und Daten dieser Beobachtungsoptik 16 von Bedeutung sind. Wenn die Beobachtung des Plasmas in einem beschränkten Wellenlängenbereich erfolgt, in dem es als optisch dünn angesehen werden kann, ist die beobachtete Intensität der Strahlung proportional zur Anzahl der Teilchen, die im Beobachtungsbereich liegen. Wird axial zur Bearbeitungsrichtung über die gesamte Dicke des Werkstücks 10 scharf beobachtet, so ist die gemessene Intensität des Lichts des Plasmas in erster Näherung proportional zur Eindringtiefe der Dampfkapillaren in das Werkstück. Da der Prozeß nicht ideal verläuft, sind Dichte und Temperatur innerhalb der Dampfkapillaren nicht konstant, weil z.B. ein partielles Schließen der Dampfkapillaren bei Bewegung von Absorptions- und Schmelzfront eine erhöhte Verdampfungsrate während der Relaxation in den stationären Zustand erfordert. Darüberhinaus hängt das emittierte Licht bzw. dessen Intensität auch von Bearbeitungsparametern und Einflußgrößen ab. Die grundlegenden Vorgänge lassen sich jedoch anhand der Fig.3a bis 3c erläutern, mit denen auch der Signalverlauf im oberen Teil der Fig.2 erklärt werden kann.

Da die Absorptionsfront 41 gemäß Fig.3a zunächst eine geringe Tiefe aufweist, wird durch die hohe Intensität der Laserstrahlung schlagartig eine große Menge von Bearbeitungsmaterial abgedampft. Die kurzzeitig hohe Materialdichte führt zu einer hohen Absorption der Laserstrahlung und damit zu einer hohen Temperatur im abgedampften Material. Der Vorgang läuft so schnell ab, daß das verdampfte Material nicht expandieren kann. Die Strahlungsintensität steigt daher schlagartig und ergibt sich ein Intensitätsspitzenwert. Währenddessen wird noch keine merkliche Bewegung der Absorptionsfront 41 und erst recht noch keine Bewegung der Schmelzfront 35 erreicht.

Bedingt durch das Aufheizen des Materialdampfes wird hier ein Überdruck gegenüber der Umgebungsatmosphäre erzeugt. Es kommt zur Expansion des Metalldampfes. Daraus resultiert ein Rückgang der Temperatur des Plasmas und der Metalldampfdichte. Die Intensität der Plasmastrahlung sinkt. Der vorbeschriebene Prozeß ist in Fig.2 mit 1 gekennzeichnet.

Andererseits drückt der expandierende Metalldampf auf die Schmelze 32 und es beginnt die Ausbildung einer Dampfkapillaren. Die Schmelze 32 wird zum großen Teil verdrängt. Am tiefsten Punkt der Dampfkapillaren und an der Absorptionsfront 41 ist aufgrund der hohen Laserleistung noch immer ein Überschuß an Intensität vorhanden, so daß die Laserstrahlung zum Teil reflektiert wird und damit die Dampfkapillare wieder verläßt und zum Teil in Abdampfarbeit und Bewegung der Schmelzfront umgesetzt wird. Es beginnt ein Bohrprozeß in das feste Werkstück 10 hinein. Fig.3b zeigt einen Teilstrahl 12'' der Laserstrahlung 12, die zum Teil reflektiert und zum Teil absobiert wird. Zu Beginn der Entstehung der Dampfkapillaren erfolgen vornämlich Bewegungen an der Absorptionsfront 41 aufgrund des Rückstoßdruckes des verdampfenden Materials ohne merkliche Bewegungen der Schmelzfront 35.

Infolge der Einkopplung von Energie über das Plasma in die Absorptionsfront 41 und deren Bewegung in Richtung auf die Schmelzfront 35 beginnt der eigentliche Bohrprozeß in das feste Material des Werkstücks 10 hinein. Die Schmelzfilmdicke an der Absorptionsfront 41 wird geringer. Am Boden ist sie nahezu nicht vorhanden, wie Fig.3c zeigt. Das bedeutet aber, daß der dünne Schmelzfilm nur in sehr geringem Maße schwanken kann. Also wird die beobachtete Intensität der Plasmastrahlung dann nur noch von geringen Schwankungen überlagert. Dies wird im Verlauf des Plasmasignals, also des Verlaufs der Intensität der Plasmastrahlung, in Abhängigkeit von der Zeit sehr deutlich.

Bei weiterem Eindringen der Dampfkapillaren in das feste Werkstück 10 wird die Dampfkapillare im Mittel so tief, daß die zweite Reflektion auf die Wände oder auf den Boden der Dampfkapillaren 13 trifft, vgl. Fig.3c. Damit erhöht sich die insgesamt absorbierte Laserleistung um den Anteil der zweiten Reflektion, was zum Signalsprung führt. Weitere Reflektionen der Laserstrahlung innerhalb der Dampfkapillaren führen zur Strahlungsabsorption und entsprechenden weiteren Sprüngen im Signalverlauf. Die durch die weiteren Reflektionen bedingten Signalniveaus sind nicht mehr aufzulösen und der mittlere Signalanstieg wird beendet sein, wenn über den Effekt der Mehrfachreflektion die CO₂-Strahlung fast völlig absorbiert ist. Dieser Quasigleichgewichtszustand wird allerdings durch eine starke Zunahme der Signalschwankungen angezeigt. Die Ursache hierfür ist, daß für ein weiteres Bohren in das feste Material hinein nicht genug Leistung vorhanden ist. An der Kapillarfront wird daher nur soviel Werkstoff abgedampft, wie nötig ist, um die Kapillare bei gegebener Vorschubgeschwindigkeit in den Festkörper hineintreiben zu können. Zunehmend spielt die langsamere Wärmeleitung eine Rolle und es bildet sich ein dickerer Schmelzefilm aus, womit wiederum die starke Zunahme der Signalschwankungen zusammen hängt. Dieser Bereich ist mit 2 gekennzeichnet.
Zuvor erfolgen Bewegungen der Absorptionsfront aufgrund des Rückstoßdruckes verdampfenden Werkstoffs ohne merkliche Bewegung der Schmelzfront. Die zugeordnete Form des Strahlungssignals ist eine starke Schwankung um den mittleren Signalwert. Die Plasmabildung und die folgenden Bewegungen der Absorptionsfront halten so lange an, daß auch die Schmelzfront mit erhöhter Geschwindigkeit läuft. In diesem Fall sind die starken Schwankungen des Signals unterdrückt. Die vorgenannten Abläufe sind in Fig.2 mit 3 gekennzeichnet.

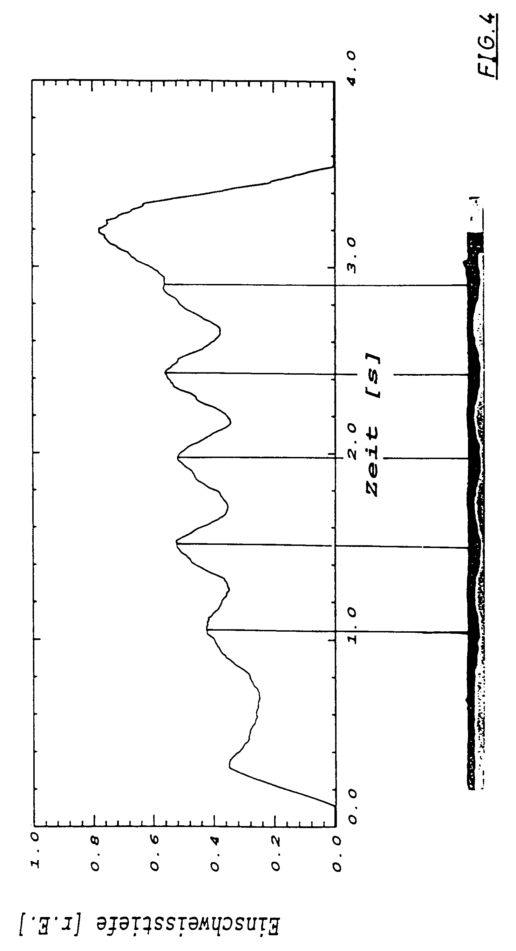

Wegen der starken Signalschwankungen ergeben sich bei der Ermittlung der Eindringtiefe aufgrund des Signalverlaufs nach Fig.2 erhebliche Schwierigkeiten. Die Schwankungen enthalten aber auch Informationen über Vorgänge in der Dampfkapillaren, die auch für die Bestimmung der Eindringtiefe notwendig sind. Mit Hilfe einer geeigneten Mittelung kann aus dem Signalverlauf trotz der starken Signalschwankungen eine mittlere Eindringtiefe selektiert werden. Eine solche zeitliche Mittelung ist in Fig.4 dargestellt. Aus dem Vergleich der Zeitmaßstäbe der Fig.2 und 4 ergibt sich, daß der Signalverlauf nach Bild 2 der Anstiegsphase in Bild 4 entspricht. Insgesamt ergibt sich in Fig.4 unter Beachtung des unten dargestellten Werkstückquerschnitts, daß die Eindringtiefe bzw. die Einschweißtiefe qualitativ und quantitativ durch das gemittelten Sensorsignal sehr gut wiedergegeben wird.

Die beim Materialbearbeiten auftretenden Signalbesonderheiten stören das Meßergebnis. Es sind dies zeitlich isolierte Intensitätsspitzenwerte, sogenannte Signalpeaks, die infolge einer starken und schnellen Aufheizung der Oberfläche auftreten. Während der kurzen Zeiten dieser Signalpeaks ist eine Bewegung der Absorptions- bzw. der Schmelzfront nicht möglich. Des weiteren treten ausgeprägte quasi periodische Schwankungen des Signals um den stationären mittleren Signalwert auf, die von hydrodynamischen Schwingungen der Absorptionsfront in der Dampfkapillare herrühren. Um die dadurch bedingten Verfälschungen des Signalverlaufs ausschalten zu können, können getriggerte Filter eingesetzt werden. Die Triggerung erfolgt, indem akustische und/oder optische Signale herangezogen werden, die z.B. infolge starker Verdampfung auftreten und von der Seite beobachtet werden können, also von außerhalb der Achse 11 der Laserstrahlung 12.

Es ist auch möglich, Intensitätsspitzenwerte sowohl in der Achse 11 der Laserstrahlung 12 zu beobachten, als auch seitlich davon. Durch Laufzeitmessung bzw. Ermittlung der Laufzeitdifferenzen eines in der Achse der Laserstrahlung ermittelten Signals und eines seitlich davon ermittelten Signals läßt sich der Entstehungsort des Signalwerts in der Dampfkapillaren ermitteln. Diese Messung kann zur Fehlerermittlung herangezogen werden.

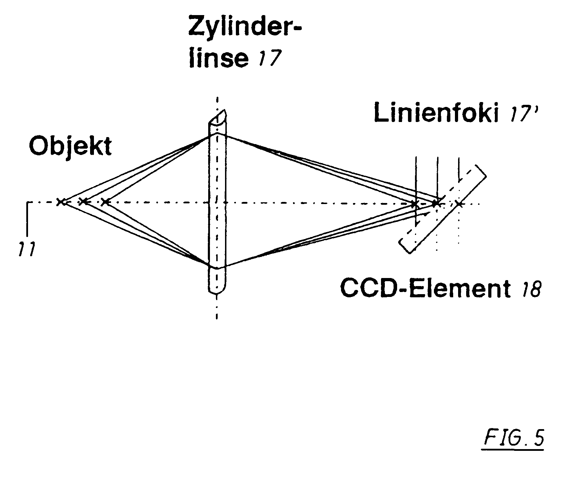

Der Lokalisierung von speziellen Vorgängen innerhalb der Dampfkapillaren kommt besondere Bedeutung zu. Es können besondere Ausgestaltungen von Vorrichtungen zur Beobachtung der Plasmastrahlung eingesetzt werden, um lokale Abbildungen aus der Dampfkapillaren über deren Tiefe verteilt zu erreichen. Fig.5 zeigt in schematischer Darstellung die Ausgestaltung einer Beobachtungsoptik mit einer Zylinderlinse 17. In den Foki 17' dieser Linse wird die zum jeweiligen Fokus konjugierte Ebene als Linie abgebildet. Diejenige konjugierte Ebene, die der am weitesten von der Zylinderlinse 17 entfernten Stelle des Objekts, also der tiefsten vorbestimmten Stelle innerhalb der Dampfkapillaren, zugeordnet ist, wird als am weitesten von der Zylinderlinse 17 entfernter Linienfokus 17 scharf abgebildet. Um die Dampfkapillare über die gesamte Tiefe erfassen zu können, ist es erforderlich, die jeweils interessierenden Linienfoki 17' zu erfassen. Hierzu wird eine der Zylinderlinse 17 im Strahlengang nachgeordnete Diodenzeile 18 eingesetzt, die jedoch im aus der Fig.5 ersichtlichen spitzen Winkel zur Achse 11 angeordnet ist. Infolgedessen werden die unterschiedlichen Ebenen der Dampfkapillaren auf unterschiedlichen Dioden scharf abgebildet. Entsteht also ein Intensitätsspitzenwert im Bereich des Bodens der Dampfkapillare, so ist ein entsprechendes Diodensignal im Bereich der von der Zylinderlinse 17 am weitesten entferten Dioden zu erwarten. Ein solches Diodensignal kann dann zum Triggern bei der Bildung des Mittelwertes der Strahlungsintensität benutzt werden, wie auch zum Dokumentieren des örtlichen Bereichs im Verlauf der Bahn der Materialbearbeitung. Aus der Gesamtheit der Ausgangswerte der Dioden der Diodenzeile 18 wird der Mittelwert der Intensität der Plasmastrahlung gebildet, der als Maß für die Eindringtiefe angesehen werden kann.

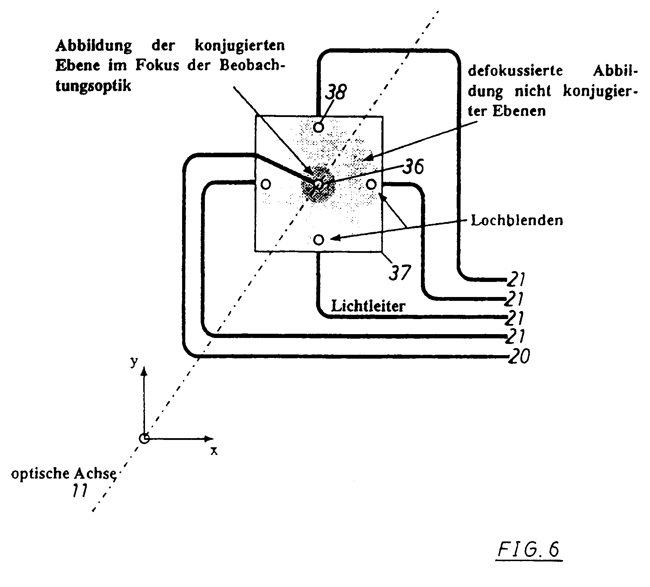

Eine weitere spezielle Meßeinrichtung zeigt Fig.6. In der optischen Achse 11 der Laserstrahlung 12 wird als Beobachtungsoptik 16 eine rotationssymmetrische Optik eingesetzt. Die Optik fokussiert die Strahlung, die in der zu ihrer Bildebene konjugierten Ebene entsteht, auf einen Punkt der optischen Achse 11. In diesen Punkt ist das Loch 36 einer Lochblende 37 angeordnet. Hinter dem Loch ist ein Lichtsensor 20 als Lichtwellenleiter vorhanden, der denjenigen Anteil der Plasmastrahlung des Beobachtungsfokus 30 ermittelt. Die Lochblende 27 hat weitere, vom Loch 36 radial entfernt liegende Löcher 38, denen Lichtsensoren 21 nachgeordnet sind. Diese sind ebenfalls als Lichtleiter ausgebildet und messen denjenigen Anteil der Plasmastrahlung, deren dominierender Signalanteil eben nicht in der konjugierten Ebene des Beobachtungsfokus 30 liegt. Auf diese Weise lassen sich gleichzeitig Signale in der Tiefe der Wechselwirkungszone der Dampfkapillaren und oberhalb oder unterhalb des Werkstücks 10 erfassen und miteinander vergleichen. In Fig.6 liegen vier Löcher 38 auf demselben Radius vom Loch 36 enfernt. Im Prinzip genügt ein einziges Loch 38. Zur Ermittlung weiterer Informationen können die Löcher auf unterschiedlichen Radien angeordnet sein.

## Patentansprüche

1. Verfahren zum Materialbearbeiten mit Plasma induzierender Hochenergiestrahlung, insbesondere Laserstrahlung, bei dem aus dem Bereich des Werkstücks (10) herrührende Strahlung in der Achse (11) der auf das Werkstück (10) fokussierten Laserstrahlung (12) in Abhängigkeit von der Zeit beobachtet wird, **dadurch gekennzeichnet**, daß ausschließlich der Querschnitt der Dampfkapillaren (13) mit einer die gesamte Werkstückdicke (14) erfassenden Tiefenschärfe beobachtet wird, und daß der Mittelwert der Intensität der Plasmastrahlung als Maß für die Eindringtiefe verwendet wird.

2. Verfahren nach Anspruch 1, **dadurch gekennzeichnet**, daß der Mittelwert der Strahlungsintensität unter Ausschaltung von Intensitätsspitzenwerten bestimmt wird, die gleichzeitig mit optischen und/oder akustischen Signalen auftreten, welche seitlich der fokussierten Laserstrahlung (12) ermittelt werden.

3. Verfahren nach Anspruch 1 oder 2, **dadurch gekennzeichnet**, daß der Entstehungsort von Intensitätsspitzenwerten in der Dampfkapillaren (13) durch Laufzeitdifferenzmessung axialer und seitlicher einander zeitlich zugehöriger Meßwerte bestimmt wird.

4. Vorrichtung zum Materialbearbeiten mit Plasma induzierender Laserstrahlung (12), die von einem Spiegel (15) auf das Werkstück (10) fokussiert wird, und mit einer vom Werkstück (10) herrührende Strahlung in der Richtung der fokussierten Laserstrahlung (12) beobachtenden Optik (16), zur Durchführung des Verfahrens nach einem der Ansprüche 1 bis 3, **dadurch gekennzeichnet**, daß der radiale Beobachtungsbereich der Beobachtungsoptik (16) auf den Querschnitt der Dampfkapillaren beschränkt ist, daß eine den Mittelwert der Intensität der Plasmastrahlung erfassende Meßeinrichtung vorhanden ist, und daß die Beobachtungsoptik (16) eine Zylinderlinse (17) mit im Strahlengang nachgeordneter Diodenzeile (18) aufweist, die schräggestellt und an eine Auswerteeinheit (19) angeschlossen ist, welche die Ausgangswerte der einzelnen Dioden in Relation zu einem vorbestimmten Bezugswert auswertet.

5. Vorrichtung zum Materialbearbeiten mit Plasma induzierender Laserstrahlung (12), die von einem Spiegel (15) auf das Werkstück (10) fokussiert wird, und mit einer vom Werkstück (10) herrührende Strahlung in der Richtung der fokussierten Laserstrahlung (12) beobachtenden Optik (16), zur Durchführung des Verfahrens nach einem der Ansprüche 1 bis 3, **dadurch gekennzeichnet**, daß der radiale Beobachtungsbereich der Beobachtungsoptik (16) auf den Querschnitt der Dampfkapillaren beschränkt ist, daß eine den Mittelwert der Intensität der Plasmastrahlung erfassende Meßeinrichtung vorhanden ist, daß die Beobachtungsoptik (16) eine rotationssymmetrische Linse aufweist, auf deren optischer Achse (11) ein Lichtsensor (20) angeordnet ist, der denjenigen Strahlungsanteil erfaßt, der aus der dem Fokus (24) der Beobachtungsoptik (16) konjugierten Ebene herrührt, und daß mindestens ein weiterer Lichtsensor (21) außerhalb der optischen Achse (11) der Beobachtungsoptik (16) angeordnet ist, der einen Strahlungsanteil erfaßt, der aus einer dem Fokus (24) der Beobachtungsoptik (16) nicht konjugierten Ebene herrührt, und daß alle Lichtsensoren (20,21) an eine Auswerteeinheit (19) angeschlossen sind, welche die gemessenen Strahlungsintensitäten in Relation zu einem vorbestimmten Bezugswert auswertet.

6. Vorrichtung nach Anspruch 5, **dadurch gekennzeichnet**, daß die Lichtsensoren (20,21) Lichtwellenleiter sind.

7. Vorrichtung nach einem der Ansprüche 4 bis 6, **dadurch gekennzeichnet**, daß der spektrale Bereich der vom Werkstück (10) herrührenden Strahlung mit einem Bandpaßfilter beschränkt ist.

8. Vorrichtung nach einem der Ansprüche 4 bis 7, **dadurch gekennzeichnet,** daß die Laserstrahlung (12) einen Ringmode (23) aufweist, daß ein Lochspiegel als Fokussierspiegel (15) vorhanden ist, und daß das Loch (22) des Fokussierspiegels (15) innerhalb des Ringmaximums (28) des Ringmodes (23) angeordnet ist.

9. Vorrichtung nach einem der Ansprüche 4 bis 8, **dadurch gekennzeichnet**, daß der Fokus der Beobachtungsoptik (16) an der Unterseite (10') des Werkstücks (10) angeordnet ist.

## Claims

1. Method for the working of materials by means of plasma-inducing high-energy radiation, in particular laser radiation, in which radiation originating from the region of the workpiece (10) is observed along the axis (11) of the laser radiation (12) focused on the workpiece (10) as a function of time, **characterised in that** only the cross-section of the vapour capillary (13) is observed with a depth of focus covering the whole thickness (14) of the workpiece, and the mean value of the intensity of the plasma radiation is used as a measure of the penetration depth.

2. Method according to claim 1, **characterised in that** the mean value of the radiation intensity is determined with the exclusion of intensity peak values which occur simultaneously with optical and/or acoustic signals which are detected laterally of the focused laser radiation (12).

3. Method according to claim 1 or 2, **characterised in that** the source of intensity peak values in the vapour capillary (13) is determined by transit time difference measurement of mutual axial and lateral chronological accompanying measurement values.

4. Apparatus for the working of materials by means of plasma-inducing laser radiation (12) which is focused by a mirror (15) on the workpiece (10), and comprising viewing optics (16) arranged to observe in the direction of the focused laser radiation (12) radiation originating from the workpiece (10), for carrying out the method according to one of claims 1 to 3, **characterised in that** the radial viewing zone of the viewing optics (16) is limited to the cross-section of the vapour capillary, a measuring device is provided arranged to determine the mean value of the intensity of the plasma radiation, and the viewing optics (16) comprises a cylindrical lens (17) with following row of diodes (18) arranged in the radiation path, said diodes being tilted and connected to an evaluation unit (19) which evaluates the output values of the individual diodes in relation to a predetermined reference value.

5. Apparatus for the working of materials by means of plasma-inducing laser radiation (12) which is focused by a mirror (15) on the workpiece (10), and comprising viewing optics (16) arranged to observe in the direction of the focused laser radiation (12) radiation originating from the workpiece (10), for carrying out the method according to one of claims 1 to 3, **characterised in that** the radial viewing zone of the viewing optics (16) is limited to the cross-section of the vapour capillary, a measuring device is provided arranged to determine the mean value of the intensity of the plasma radiation, the viewing optics (16) comprises a rotationally symmetrical lens on whose optical axis (11) is arranged a light sensor (20) which detects the particular portion of the radiation which originates from the plane conjugate with the focus (24) of the viewing optics (16), and at least one further light sensor (21) is arranged off the optical axis (11) of the viewing optics (16), which determines a portion of the radiation which originates from a plane which is not conjugate with the focus (24) of the viewing optics (16), and all light sensors (20, 21) are connected to an evaluation unit (19) which evaluates the measured radiation intensities in relation to a predetermined reference value.

6. Apparatus according to claim 5, **characterised in that** the light sensors (20, 21) are optical waveguides.

7. Apparatus according to one of claims 4 to 6, **characterised in that** the spectral region of the radiation originating from the workpiece (10) is limited by a bandpass filter.

8. Apparatus according to one of claims 4 to 7, **characterised in that** the laser radiation (12) comprises a ring mode (23), an apertured mirror is provided as focusing mirror (15), and the hole (22) of the focusing mirror (15) is arranged within the ring maximum (28) of the ring mode (23).

9. Apparatus according to one of claims 4 to 8, **characterised in that** the focus of the viewing optics (16) is arranged on the underside (10') of the workpiece (10).

## Revendications

1. Procédé pour l'usinage de matériaux avec un rayonnement à haute énergie inducteur de plasma, en particulier un rayonnement laser, selon lequel on observe en fonction du temps le rayonnement provenant de la zone de la pièce à usiner (10), dans l'axe (11) du rayonnement laser (12) focalisé sur ladite pièce (10), **caractérisé** en ce qu'on observe exclusivement la section transversale du capillaire de vapeur (13) avec une profondeur de champ qui comprend toute l'épaisseur de pièce (14), et en ce qu'on utilise la valeur moyenne de l'intensité du rayonnement de plasma comme mesure pour la profondeur de pénétration.

2. Procédé selon la revendication 1, **caractérisé** en ce qu'on définit la valeur moyenne de l'intensité de rayonnement en supprimant les valeurs de pointe d'intensité qui apparaissent en même temps que des signaux optiques et/ou acoustiques, lesquels sont déterminés latéralement par rapport au rayonnement laser focalisé (12).

3. Procédé selon la revendication 1 ou 2, **caractérisé** en ce que le lieu de formation de valeurs de pointe d'intensité dans le capillaire de vapeur (13) est défini grâce à la mesure de la différence de temps de propagation de valeurs de mesure axiales et latérales associées dans le temps.

4. Dispositif pour l'usinage de matériaux avec un rayonnement laser inducteur de plasma (12) qui est focalisé sur la pièce à usiner (10) à l'aide d'un miroir (15), et avec un système optique (16) qui observe le rayonnement provenant de la pièce (10), dans le sens du rayonnement laser focalisé (12), pour la mise en oeuvre du procédé selon l'une des revendications 1 à 3, **caractérisé** en ce que la zone d'observation radiale du système optique d'observation (16) est limitée à la section transversale du capillaire de vapeur, en ce qu'il est prévu un dispositif de mesure qui enregistre la valeur moyenne de l'intensité du rayonnement laser, et en ce que le système optique d'observation (16) comporte une lentille cylindrique (17) avec une rangée de diodes (18) subordonnée dans le trajet du rayon, inclinée et reliée à une unité d'évaluation (19) qui évalue les valeurs de sortie des diodes individuelles en relation avec une valeur de référence prédéfinie.

5. Dispositif pour l'usinage de matériaux avec un rayonnement laser inducteur de plasma (12) qui est focalisé sur la pièce à usiner (10) à l'aide d'un miroir (15), et avec un système optique (16) qui observe le rayonnement provenant de la pièce (10), dans le sens du rayonnement laser focalisé (12), pour la mise en oeuvre du procédé selon l'une des revendications 1 à 3, **caractérisé** en ce que la zone d'observation radiale du système optique d'observation (16) est limitée à la section transversale du capillaire de vapeur, en ce qu'il est prévu un dispositif de mesure qui enregistre la valeur moyenne de l'intensité du rayonnement de plasma, en ce que le système optique d'observation (16) comporte une lentille symétrique en rotation sur l'axe optique (11) de laquelle est disposé un capteur de lumière (20) enregistrant la part de rayonnement qui provient du plan conjugué au foyer (24) du système optique d'observation (16), en ce qu'il est prévu, à l'extérieur de l'axe optique (11) du système optique d'observation (16), au moins un autre capteur de lumière (21) qui enregistre une part de rayonnement provenant d'un plan non conjugué au foyer (24) du système optique d'observation (16), et en ce que tous les capteurs de lumière (20, 21) sont reliés à une unité d'évaluation (19) qui évalue les intensités de rayonnement mesurées, en relation avec une valeur de référence prédéfinie.

6. Dispositif selon la revendication 5, **caractérisé** en ce que les capteurs de lumière (20, 21) sont des guides d'ondes optiques.

7. Dispositif selon l'une des revendications 4 à 6, **caractérisé** en ce que la zone spectrale du rayonnement provenant de la pièce à usiner (10) est limitée à l'aide d'un filtre passe-bande.

8. Dispositif selon l'une des revendications 4 à 7, **caractérisé** en ce que le rayonnement laser (12) présente un mode annulaire (23), en ce qu'il est prévu, comme miroir de focalisation (15), un miroir perforé, et en ce que le trou (22) du miroir de focalisation (15) est disposé à l'intérieur du maximum annulaire (28) du mode annulaire (23).

9. Dispositif selon l'une des revendications 4 à 8, **caractérisé** en ce que le foyer du système optique d'observation (16) est disposé sur le côté inférieur (10') de la pièce à usiner (10).
